(19) Europäisches Patentamt
European Patent Office
Office européen des brevets

(11) **EP 3 650 217 B1**

(12) **EUROPEAN PATENT SPECIFICATION**

(45) Date of publication and mention
of the grant of the patent:
**27.12.2023   Bulletin 2023/52**

(21) Application number: **19207627.1**

(22) Date of filing: **07.11.2019**

(51) International Patent Classification (IPC):
**B32B 27/18** (2006.01)   **B32B 1/08** (2006.01)
**B32B 7/12** (2006.01)   **B32B 27/08** (2006.01)
**B32B 27/30** (2006.01)   **B32B 27/32** (2006.01)
**F16L 9/12** (2006.01)   **F24D 3/14** (2006.01)

(52) Cooperative Patent Classification (CPC):
**B32B 1/08; B32B 7/12; B32B 27/08; B32B 27/18;**
**B32B 27/306; B32B 27/32; F16L 9/121;**
B32B 2250/03; B32B 2250/24; B32B 2307/306;
B32B 2307/7242; B32B 2597/00; F24D 3/14;
Y02B 30/00

(54) **MULTILAYERED PIPE AND METHOD FOR PRODUCING SAME**

MEHRSCHICHTIGES ROHR UND VERFAHREN ZUR HERSTELLUNG DAVON

TUYAU MULTICOUCHE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.11.2018   JP 2018210971**
**08.10.2019   JP 2019184972**

(43) Date of publication of application:
**13.05.2020   Bulletin 2020/20**

(73) Proprietor: **Kuraray Co., Ltd.**
**Kurashiki-shi, Okayama 710-0801 (JP)**

(72) Inventor: **HATA, Kazuhira**
**Kurashiki-shi, Okayama 713-8550 (JP)**

(74) Representative: **Müller-Boré & Partner**
**Patentanwälte PartG mbB**
**Friedenheimer Brücke 21**
**80639 München (DE)**

(56) References cited:
**JP-A- H07 186 310     JP-A- 2004 114 389**
**JP-A- 2006 123 532     US-A1- 2015 376 372**

**Description**

[Technical Field]

The present invention relates to a multilayered pipe and a manufacturing method of the same.

[Background Art]

Ethylene-vinyl alcohol copolymers have a wide variety of excellent properties, such as gas barrier properties, aroma retention, solvent resistance, and oil resistance, and the use of ethylene-vinyl alcohol copolymers for various molded products has been proposed.

Applications of ethylene-vinyl alcohol copolymers that make use of such properties include floor heating pipes that are arranged under the floor of a house or a building, for example. Floor heating pipes are one type of hot water circulation pipe, and are constituted by, for example, a multilayered structure that contains a polyolefin and an ethylene-vinyl alcohol copolymer. For example, crosslinkable polyolefins are sometimes used to manufacture floor heating pipes. As a result of crosslinking polyolefin components by performing heat treatment under high humidity conditions, a pipe to be obtained can be imparted with appropriate heat resistance.

For example, Patent Document 1 describes a multilayered pipe that is constituted by a multilayered structure that includes an inner layer that is made of crosslinked polyethylene, such as silane crosslinked polyethylene, a gas barrier layer that is made of an ethylene-vinyl alcohol copolymer and the like, and a protective layer that is made of low-density polyethylene and the like and is located in an outer peripheral portion around the inner layer and the gas barrier layer. With this multilayered pipe, it is possible to suppress reductions in oxygen permeation preventing performance and inter-layer lamination strength caused by variations in ratios of the layers if the crosslinked polyethylene is subjected to coextrusion.

Patent Document 2 describes a hot water circulation pipe that includes a layer made of water crosslinked polyethylene and a layer made of an ethylene-vinyl alcohol copolymer. Patent Document 2 describes that these layers may also contain an antioxidant in order to prevent degradation of the pipe even if high-temperature hot water is passed through the pipe, so that the pipe can be used for a long period of time.

Patent Document 3 describes a multilayered pipe that includes a layer made of a crosslinked polyolefin, an adhesive layer, and a layer made of an ethylene-vinyl alcohol copolymer. Patent Document 3 also describes that the layer made of the ethylene-vinyl alcohol copolymer in this multilayered pipe may contain an antioxidant.

Patent Document 4 describes a multilayered resin pipe that includes a layer containing a polyolefin, such as silane crosslinked polyethylene, an adhesive layer, and a gas barrier layer made of an ethylene-vinyl alcohol copolymer and the like. Patent Document 4 also describes that this multilayered resin pipe is intended to be used as a pipe for supplying gas containing hydrogen gas as the main component or a liquid and has high mechanical strength.

In the case of multilayered pipes as those described above, a pipe, which is a multilayered structure, is preliminarily molded using a silane crosslinkable (i.e., uncrosslinked) polyolefin, and thereafter the preliminarily molded pipe is subjected to predetermined humidity and temperature conditions (for example, heat treatment performed under high humidity conditions, such as 100%RH and 82°C) to promote crosslinking of the polyolefin, and thus a silane crosslinked polyolefin is formed within a layer.

Patent Document 5 discloses a multi-layered pipe comprising a layer (A) that contains a silane cross-linked polyolefin, a layer (B) that contains an adhesive resin and a layer (C) that contains an ethylene-vinyl alcohol copolymer and an antioxidant.

[Citation List]

[Patent Documents]

Patent Document 1: Japanese Laid-Open Patent Publication No. 2006-289964
Patent Document 2: Japanese Laid-Open Patent Publication No. S61-83035
Patent Document 3: Japanese Laid-Open Patent Publication No. H8-224836
Patent Document 4: Japanese Laid-Open Patent Publication No. 2007-283582
Patent Document 5: Japanese Laid-Open Patent Publication No. 2006-123532

[Summary of Invention]

[Problems to be Solved by the Invention]

However, it is pointed out that, if heat treatment is performed under high humidity conditions in the manufacture of the multilayered pipes described in the above Patent Documents 1 to 4, gas barrier properties of the pipes are impaired. In particular, if a multilayered pipe is to be used as a hot water circulation pipe, an antioxidant is sometimes contained in a layer that contains an ethylene-vinyl alcohol copolymer in order to improve durability, as described in the above Patent Documents as well. Such an antioxidant may bleed out as a result of being subjected to heat treatment under high humidity conditions as described above, and the pipe to be obtained may not be imparted with appropriate gas barrier properties.

The present invention aims to solve the above-described problem and provides a multilayered pipe that contains an antioxidant together with an ethylene-vinyl alcohol copolymer and can maintain gas barrier properties even if subjected to heat treatment under high humidity conditions, and also provides a manufacturing method of the multilayered pipe.

[Means for Solving the Problem]

The present invention is a multilayered pipe comprising a layer (A) that contains a silane crosslinked polyolefin (a), a layer (B) that contains an adhesive resin (b), and a layer (C) that contains an ethylene-vinyl alcohol copolymer (c) and an antioxidant (d), the layers (A), (B), and (C) being layered in this order around a center axis of the multilayered pipe, wherein, in the layer (C),

the ethylene-vinyl alcohol copolymer (c) has an ethylene unit content of 15 mol% to 50 mol% and a saponification degree of 90 mol% or more,
the antioxidant (d) is contained at a ratio of 0.1 parts by mass to 5 parts by mass relative to 100 parts by mass of the ethylene-vinyl alcohol copolymer (c), and
the antioxidant (d) satisfies a relationship expressed by the following Expression (I):

$$\frac{SP}{\sqrt{MW}} \leq 0.450 \ (cal \cdot mol/g \cdot cm^3)^{1/2} \quad (I)$$

where SP represents a solubility parameter of the antioxidant (d) and MW represents a molecular weight of the antioxidant (d).

In one embodiment, the antioxidant (d) satisfies a relationship expressed by the following Expression (I'):

$$0.250 \leq \frac{SP}{\sqrt{MW}} \leq 0.450 \ (cal \cdot mol/g \cdot cm^3)^{1/2} \quad (I').$$

In one embodiment, the layer (A) and the layer (B) are layered in close contact with each other, and the layer (B) and the layer (C) are layered in close contact with each other.
In one embodiment, the layer (C) contains a conjugated polyene compound (e) in an amount of 10 ppm to 1000 ppm relative to 100 parts by mass of the ethylene-vinyl alcohol copolymer (c).
In one embodiment, the layer (A) is arranged as an innermost layer or an outermost layer.
In one embodiment, the silane crosslinked polyolefin (a) contained in the layer (A) is obtained by silane-crosslinking a silane crosslinkable polyolefin (a') by subjecting the silane crosslinkable polyolefin (a') to an atmosphere of water vapor of a humidity of 80%RH or higher and 50°C or higher, or hot water of 50°C or higher.
The present invention is also a multilayered pipe comprising a layer (A') that contains a silane crosslinkable polyolefin (a'), a layer (B) that contains an adhesive resin (b), and a layer (C) that contains an ethylene-vinyl alcohol copolymer (c) and an antioxidant (d), the layers (A'), (B), and (C) being layered in this order around a center axis of the multilayered pipe,

wherein the layer (A') is arranged as an innermost layer or an outermost layer,
in the layer (C),

the ethylene-vinyl alcohol copolymer (c) has an ethylene unit content of 15 mol% to 50 mol% and a saponification degree of 90 mol% or more,

the antioxidant (d) is contained at a ratio of 0.1 parts by mass to 5 parts by mass relative to 100 parts by mass of the ethylene-vinyl alcohol copolymer (c), and

the antioxidant (d) satisfies a relationship expressed by the following Expression (I):

$$\frac{SP}{\sqrt{MW}} \leq 0.450 \ (\mathrm{cal \cdot mol/g \cdot cm^3})^{1/2} \quad (I)$$

where SP represents a solubility parameter of the antioxidant (d) and MW represents a molecular weight of the antioxidant (d).

In one embodiment, the antioxidant (d) satisfies a relationship expressed by the following Expression (I'):

$$0.250 \leq \frac{SP}{\sqrt{MW}} \leq 0.450 \ (\mathrm{cal \cdot mol/g \cdot cm^3})^{1/2} \quad (I').$$

In one embodiment, the layer (A') and the layer (B) are layered in close contact with each other, and the layer (B) and the layer (C) are layered in close contact with each other.

In one embodiment, the layer (C) contains a conjugated polyene compound (e) in an amount of 10 ppm to 1000 ppm relative to 100 parts by mass of the ethylene-vinyl alcohol copolymer (c).

The present invention is also a method for manufacturing the multilayered pipe, comprising

silane-crosslinking the silane crosslinkable polyolefin (a') contained in the multilayered pipe.

In one embodiment, the silane-crosslinking is carried out by subjecting the silane crosslinkable polyolefin (a') contained in the multilayered pipe to an atmosphere of water vapor of a humidity of 80%RH or higher and 50°C or higher, or hot water of 50°C or higher.

The present invention is also a method for preventing an antioxidant (d) from bleeding out from a multilayered pipe that contains a silane crosslinkable polyolefin (a') and the antioxidant (d) when improving heat resistance of the multilayered pipe, the method comprising

silane-crosslinking the silane crosslinkable polyolefin (a') contained in the multilayered pipe by using the multilayered pipe.

In one embodiment, the silane-crosslinking is carried out by subjecting the silane crosslinkable polyolefin (a') contained in the multilayered pipe to an atmosphere of water vapor of a humidity of 80%RH or higher and 50°C or higher, or hot water of 50°C or higher.

[Effects of the Invention]

According to the present invention, bleeding out of the antioxidant due to heat treatment performed under high humidity conditions can be prevented. Furthermore, the ethylene-vinyl alcohol copolymer and the antioxidant can be appropriately contained together in a layer constituting the pipe, and separation of the layer containing the ethylene-vinyl alcohol copolymer and formation of minute cracks in the layer can be suppressed or mitigated, and therefore gas barrier properties of the pipe can be maintained.

[Brief Description of Drawings]

FIG. 1 is a schematic diagram showing one example of a first multilayered pipe according to the present invention. FIG. 1(i) is a plan view of the first multilayered pipe, and FIG. 1(ii) is a side view of the first multilayered pipe shown in FIG. 1(i).

FIG. 2 is a cross-sectional view of the first multilayered pipe according to the present invention taken along line A-A in FIG. 1(i).

FIG. 3 is a schematic cross-sectional view of another example of the first multilayered pipe according to the present invention.

FIG. 4 shows schematic cross-sectional views of examples of a second multilayered pipe (uncrosslinked pipe) according to the present invention. FIG. 4(i) is a cross-sectional view of a multilayered pipe in which a layer (A') that contains a silane crosslinkable polyolefin (a') is arranged as the innermost layer, and FIG. 4(ii) is a cross-sectional view of a multilayered pipe in which the layer (A') containing the silane crosslinkable polyolefin (a') is arranged as the outermost layer.

[Modes for Carrying Out the Invention]

First Multilayered Pipe

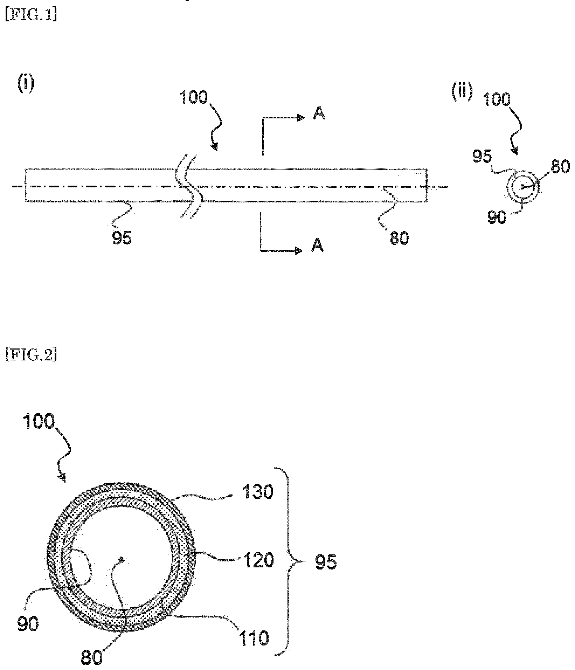

First, one example of a first multilayered pipe according to the present invention will be described with reference to FIG. 1. The first multilayered pipe according to the present invention is a multilayered pipe (crosslinked pipe) that contains a silane crosslinked polyolefin and includes a heat-resistant pipe main body 95 and a hollow portion 90 around a center axis 80 as shown in FIGS. 1(i) and (ii), for example. A cross section of the first multilayered pipe that is orthogonal to the center axis 80 is constituted by, for example, a combination of a hollow portion that has a circular shape, an elliptical shape, or a polygonal shape, and a circular, elliptical, or polygonal external shape.

A first multilayered pipe 100 according to the present invention has a layered structure that is arranged around the center axis 80, and includes a layer (A) that contains a silane crosslinked polyolefin (a), a layer (B) that contains an adhesive resin (b), and a layer (C) that contains an ethylene-vinyl alcohol copolymer (c) and an antioxidant (d), and these layers are layered in this order.

(1) Layer (A)

The silane crosslinked polyolefin (a) contained in the layer (A) is a polyolefin that is obtained by crosslinking a silane crosslinkable polyolefin (a') through the action of water (for example, hot water or water vapor), for example. The silane crosslinked polyolefin (a) has a gel fraction of 55% or more in one embodiment, 55% or more and 90% or less in another embodiment, and 50% or more and 85% or less in another embodiment.

The silane crosslinkable polyolefin (a') is a polyolefin that is obtained by grafting a silane compound onto a polyolefin.

A polyolefin that can constitute the silane crosslinkable polyolefin (a') is, for example, a homopolymer, a copolymer, or a combination of a homopolymer and a copolymer, that contains an $\alpha$-olefin unit with 2 to 12 carbon atoms preferably in an amount of 80 mass% or more, and more preferably 90 mass% or more, relative to the whole mass of the polyolefin. Examples of the $\alpha$-olefin unit include ethylene, propylene, butylene, 1-hexene, and 1-octene, and a combination thereof.

Examples of the polyolefin constituting the silane crosslinkable polyolefin (a') include: a homopolymer of ethylene; a copolymer of an ethylene unit and an $\alpha$-olefin unit other than ethylene, which contains the ethylene unit at a molar ratio higher than 50%; a homopolymer of propylene; and a copolymer of a propylene unit and an $\alpha$-olefin unit other than propylene, which contains the propylene unit at a molar ratio higher than 50%; and a combination thereof.

The polyolefin constituting the silane crosslinkable polyolefin (a') may also be a copolymer that contains the above-described $\alpha$-olefin unit and a monomer unit other than the $\alpha$-olefin. Examples of other monomer units include acrylic acid, methacrylic acid, acrylic acid esters, methacrylic acid esters, and vinyl acetate, and a combination thereof.

In the first multilayered pipe according to the present invention, polyethylene is preferable as the polyolefin constituting the silane crosslinkable polyolefin (a') in terms of its high versatility, for example, and high-density polyethylene, linear low-density polyethylene, low-density polyethylene, very-low-density polyethylene, or a combination thereof is used, for example.

Silane compounds that can constitute the silane crosslinkable polyolefin (a') are compounds that have a group that can react with polyolefins and an alkoxy group that can form a cross-link through silanol condensation, and examples of the silane compounds include vinyl silane compounds, amino silane compounds, epoxy silane compounds, acryl silane compounds, polysulfide silane compounds, and mercapto silane compounds, and a combination thereof. Examples of vinyl silane compounds include vinyltrimethoxysilane, vinyltriethoxysilane, and vinyltris($\beta$-methoxyethoxy)silane. Examples of amino silane compounds include $\gamma$-aminopropyltrimethoxysilane, $\gamma$-aminopropyltriethoxysilane, N-$\beta$-(aminoethyl) $\gamma$-aminopropyltrimethoxysilane, $\beta$-(aminoethyl) $\gamma$-aminopropylmethyldimethoxysilane, and N-phenyl-$\gamma$-aminopropyltrimethoxysilane. Examples of epoxy silane compounds include $\beta$-(3,4 epoxycyclohexyl)ethyltrimethoxysilane, $\gamma$-glycidoxypropyltrimethoxysilane, and $\gamma$-glycidoxypropylmethyldiethoxysilane. Examples of acryl silane compounds include $\gamma$-methacryloxypropyltrimethoxysilane. Examples of polysulfide silane compounds include bis(3-(triethoxysilyl)propyl)disulfide and bis(3-(triethoxysilyl)propyl)tetrasulfide. Examples of mercapto silane compounds include 3-mercaptopropyltrimethoxysilane and 3-mercaptopropyltriethoxysilane.

The silane crosslinked polyolefin (a) contained in the layer (A) can be obtained by subjecting the above-described silane crosslinkable polyolefin (a') to heat treatment under high humidity conditions as described later to cause a silanol condensation reaction through which the silane crosslinkable polyolefin (a') is silane-crosslinked.

The layer (A) may also contain other components in addition to the above-described silane crosslinked polyolefin (a) so long as heat resistance of the silane crosslinked polyolefin (a) is not impaired. Examples of other components include other additives, such as an ultraviolet absorbing agent, a plasticizer, an antistatic agent, a colorant, and a filler, and a free-radical generating agent and a silanol condensation catalyst, which are used to form silane cross-links of the silane crosslinked polyolefin (a).

Examples of ultraviolet absorbing agents include ethylene-2-cyano-3,3'-diphenylacrylate, 2-(2'-hydroxy-5'-methylphenyl)benzotriazole, 2-(2'-hydroxy-3'-t-butyl-5'-methylphenyl) 5-chlorobenzotriazole, 2-hydroxy-4-methoxybenzophenone-2,2'-dihydroxy-4-methoxybenzophenone, and 2-hydroxy-4-octoxybenzophenone, and a combination thereof.

Examples of plasticizers include dimethyl phthalate, diethyl phthalate, dioctyl phthalate, wax, liquid paraffin, and phosphate esters, and a combination thereof.

Examples of antistatic agents include pentaerythritol monostearate, sorbitan monopalmitate, sulfated polyolefins, polyethylene oxide, and carbowax, and a combination thereof.

Examples of colorants include titanium oxide, carbon black, phthalocyanine, quinacridone, indoline, azo-based pigments, and colcothar, and a combination thereof.

Examples of fillers include glass fiber, asbestos, wollastonite, and calcium silicate, and a combination thereof.

Among these other components, the free-radical generating agent and the silanol condensation catalyst are components that can be used for a silanol condensation reaction when obtaining the silane crosslinked polyolefin (a) from the above-described silane crosslinkable polyolefin (a').

The thickness of the layer (A) in the first multilayered pipe according to the present invention is preferably 100 $\mu$m to 20,000 $\mu$m, more preferably 200 um to 5,000 $\mu$m, and further preferably 300 $\mu$m to 3,000 $\mu$m, for example. If the layer (A) is in the above range, the first pipe of the present invention has high mechanical strength and the entire layer (A) can have substantially uniform silane cross-links.

(2) Layer (B)

The layer (B) is arranged between the above-described layer (A) and the layer (C), which will be described later, and contains the adhesive resin (b) as the main component.

The adhesive resin (b) is constituted by a modified polyolefin that is modified with an unsaturated carboxylic acid or a derivative thereof. Examples of unsaturated carboxylic acids and derivatives thereof include: monobasic acids such as acrylic acid and methacrylic acid; dibasic acids such as maleic acid, fumaric acid, itaconic acid, citraconic acid, and himic acid; and anhydrates thereof. One or a combination of two or more unsaturated carboxylic acids and their derivatives may be used for the adhesive resin (b).

The polyolefin constituting the adhesive resin (b) is, for example, a homopolymer, a copolymer, or a combination of a homopolymer and a copolymer, that contains an $\alpha$-olefin unit with 2 to 12 carbon atoms preferably in an amount of 80 mass% or more, and more preferably 90 mass% or more. Examples of the $\alpha$-olefin unit include ethylene, propylene, butylene, 1-hexene, and 1-octene, and a combination thereof.

Preferable examples of the polyolefin constituting the adhesive resin (b) include linear low-density polyethylene that is a copolymer of ethylene and an $\alpha$-olefin with 3 to 12 carbon atoms, a copolymer of an $\alpha$-olefin with 2 to 12 carbon atoms and a vinyl monomer (e.g., a fatty acid vinyl ester, such as vinyl acetate, or an acrylic acid ester, such as ethyl acrylate) that can be copolymerized with the $\alpha$-olefin, and a water crosslinked polyolefin (with a cross-linking degree of 55% or more, for example). The modification degree of the modified polyolefin modified with an unsaturated carboxylic acid or a derivative thereof (i.e., the amount of an unsaturated carboxylic acid or a derivative thereof that is chemically bound to the polyolefin) is preferably 0.005 mass% to 5 mass%, and more preferably 0.01 mass% to 2 mass%. It is also possible to use a blend of the modified polyolefin and an unmodified polyolefin.

The layer (B) may also contain components other than the above-described adhesive resin (b) so long as the adhesion between the adhesive resin (b) and other layers is not hindered. Examples of other components include the above-described ultraviolet absorbing agents, plasticizers, antistatic agents, colorants, and fillers.

The thickness of the layer (B) in the first multilayered pipe according to the present invention is preferably 5 um to 200 $\mu$m, more preferably 10 $\mu$m to 100 $\mu$m, and further preferably 20 $\mu$m to 80 $\mu$m, for example. If the layer (B) is in the above range, the layer (B) can favorably adhere to other layers when a layered structure constituted by the layer (B) and the other layers is formed.

(3) Layer (C)

Ethylene-Vinyl Alcohol Copolymer (c)

The ethylene-vinyl alcohol copolymer (c) (hereinafter may also be referred to as "EVOH (c)") contained in the layer (C) is a copolymer that contains an ethylene unit and a vinyl alcohol unit as main structural units and is obtained by, for example, saponifying an ethylene-vinyl ester copolymer that is obtained by copolymerizing ethylene and a vinyl ester. One example of the EVOH (c) is obtained by saponifying an ethylene-vinyl acetate copolymer.

The EVOH (c) in the present invention has an ethylene unit content (the ratio of the number of ethylene units to the total number of monomer units in the ethylene-vinyl alcohol copolymer) of 15 mol% to 50 mol%, and preferably 22 mol% to 34 mol%. If the ethylene unit content is less than 15 mol% (i.e., if the content of the vinyl alcohol unit is too high), the EVOH (c) is likely to cause oxidation degradation. If the ethylene unit content is more than 50 mol% (i.e., if the content of the vinyl alcohol unit is too low), gas barrier properties of the EVOH (c) deteriorate.

The EVOH (c) in the present invention also has a saponification degree (i.e., the ratio of the number of vinyl alcohol units to the total number of vinyl alcohol units and vinyl ester units in the ethylene-vinyl alcohol copolymer) of 90 mol% or more, preferably 96 mol% or more, and more preferably 99 mol% or more. If the saponification degree is in the above range, the EVOH (c) has excellent gas barrier properties, and even if the EVOH (c) is used for a hot water circulation pipe and is exposed to high temperature conditions, separation of carboxylic acids from the EVOH (c) can be suppressed or mitigated.

The EVOH (c) in the present invention may also contain other polymerizable monomer units in an amount of no greater than 5 mol%, for example. Examples of polymerizable monomers include $\alpha$-olefins (e.g., propylene, 1-butene, 1-hexene, and 4-methyl-1-pentene), acrylic acid esters, methacrylic acid esters, unsaturated carboxylic acids (e.g., maleic acid, fumaric acid, and itaconic acid), alkyl vinyl ethers, N-(2-dimethylaminoethyl)methacrylamide and a quaternary compound thereof, N-vinylimidazole and a quaternary compound thereof, N-vinylpyrrolidone, N,N-butoxymethyl acrylamide, vinyltrimethoxysilane, vinylmethyldimethoxysilane, and vinyldimethylmethoxysilane, and a combination thereof.

The EVOH (c) in the present invention preferably has a predetermined melt index (MI: measured at 190°C under a load of 2160 g). The melt index is preferably 0.1 g/10 minutes to 100 g/10 minutes, more preferably 0.5 g/10 minutes to 50 g/10 minutes, and further preferably 1 g/10 minutes to 30 g/10 minutes. If the melt index is in the above range, melt-moldability of the EVOH (c) constituting the layer (C) improves, and a multilayered pipe that has a good appearance can be provided even if the layer (C) is used as the outermost layer.

Antioxidant (d)

The antioxidant (d) contained in the layer (C) has antioxidation properties and satisfies a relationship expressed by the following Expression (I).

$$\frac{SP}{\sqrt{MW}} \leq 0.450 \ (cal \cdot mol/g \cdot cm^3)^{1/2} \quad (I)$$

In the expression, SP represents the solubility parameter of the antioxidant (d) and MW represents the molecular weight of the antioxidant (d). Here, the solubility parameter SP of the antioxidant (d) can be calculated using Expression (II) from the cohesive energy density and the molar volume of substituents that constitute the antioxidant (d), following the deposition method of Fedors (R. F. Fedors: Polym. Eng. Sci., 14 [2], 147-154 (1974)).

$$SP = [\Sigma E_{coh}/\Sigma V]^{1/2} \ (cal/cm^3)^{1/2} \quad (II)$$

In the expression, SP represents the solubility parameter of the antioxidant (d), $E_{coh}$ and V respectively represent the cohesive energy density (cal/mol) and the molar volume (cm$^3$/mol) of substituents constituting the antioxidant (d).

If the left-side value of the above relational expression (I) is higher than 0.450, the antioxidant (d) may bleed out from an outer surface or an inner surface of a multilayered pipe in which the antioxidant (d) is used. As a result, the multilayered pipe may not be imparted with desired antioxidation properties and the appearance of the pipe may be impaired.

Further, it is preferable that the above-described antioxidant (d) satisfies a relationship expressed by the following Expression (I').

$$0.250 \leq \frac{SP}{\sqrt{MW}} \leq 0.450 \; (cal \cdot mol/g \cdot cm^3)^{1/2} \quad (I')$$

In the expression, SP and MW are as defined above.

The antioxidant (d) that can be used in the present invention has a solubility parameter of, for example, 9 to 13, and preferably 10.5 to 12.5, while satisfying the relationship expressed by the above Expression (I) or (I'). If the solubility parameter is in the above range, the antioxidant (d) can easily disperse in the EVOH (c), and the appearance of the multilayered pipe is unlikely to be impaired due to insufficient dispersion. Further, independently of that described above, the antioxidant (d) that can be used in the present invention is constituted by a compound that has a molecular weight of 500 to 800, and preferably 550 to 800, while satisfying the relationship expressed by the above Expression (I) or (I'). If the molecular weight of the antioxidant (d) is in the above range, oxidation degradation can be effectively prevented with a smaller amount of the antioxidant, which is economical.

Examples of the antioxidant (d) that can be used in the present invention include compounds that have a hindered phenol group, for example. It is known that compounds having a hindered phenol group have high stability against heat and are capable of trapping oxygen radicals that cause oxidation degradation. Therefore, such compounds can effectively prevent oxidation degradation of the layer (C).

Examples of commercially available antioxidants, having a MW of 500 to 800, that can be used as the antioxidant (d) are listed below.

Table 1

| Commercially Available Antioxidants | Solubility Parameter (SP) | Molecular Weight (MW) | $\frac{SP}{\sqrt{MW}}$ Value |
|---|---|---|---|
| Irganox 1010 (BASF) | 11.0 | 1178 | 0.320 |
| Irganox 1035 (BASF) | 10.9 | 643 | 0.430 |
| Irqanox 1076 (BASF) | 9.59 | 531 | 0.416 |
| Irganox 1330 (BASF) | 10.9 | 775 | 0.392 |
| Irganox 1726 (BASF) | 9.97 | 537 | 0.430 |
| Irganox 259 (BASF) | 10.7 | 639 | 0.423 |
| Irganox 3114 (BASF) | 12.3 | 784 | 0.439 |
| Irganox 565 (BASF) | 10.9 | 589 | 0.449 |
| AO-20 (ADEKA) | 12.3 | 784 | 0.439 |
| AO-50 (ADEKA) | 9.59 | 531 | 0.416 |
| AO-60 (ADEKA) | 11.0 | 1178 | 0.320 |
| AO-80 (ADEKA) | 11.1 | 741 | 0.408 |
| AO-330 (ADEKA) | 10.9 | 775 | 0.392 |

In the present invention, the content of the antioxidant (d) is preferably 0.1 parts by mass to 5 parts by mass, and more preferably 0.3 parts by mass to 2 parts by mass, relative to 100 parts by mass of the above-described EVOH (c). If the content of the antioxidant (d) is less than 0.1 parts by mass, the antioxidant may fail to effectively trap a product (e.g., oxygen radicals) generated through oxidation degradation or heat degradation and fail to sufficiently prevent degradation of the layer (C) of the multilayered pipe. If the content of the antioxidant (d) is more than 5 parts by mass, the antioxidant (d) may not be appropriately dispersed in the layer (C) and impair the appearance of the multilayered pipe to be obtained.

Conjugated Polyene Compound (e)

In the present invention, the layer (C) may also contain a conjugated polyene compound (e). If the layer (C) contains the conjugated polyene compound (e), oxidation degradation of the layer (C) of the multilayered pipe may be suppressed, and a reduction in the mechanical strength and degradation of gas barrier properties may be delayed. The conjugated polyene compound (e) is a compound that has two or more carbon-carbon double bonds and has a structure in which carbon-carbon double bonds and carbon-carbon single bonds are alternately arranged. Namely, the conjugated polyene compound (e) is a compound that has so-called conjugated double bonds. Examples of the conjugated polyene compound (e) include conjugated dienes that have a structure in which two carbon-carbon double bonds and one carbon-carbon single bond are alternately arranged, conjugated trienes that have a structure in which three carbon-carbon double bonds and two carbon-carbon single bonds are alternately arranged, and conjugated polyene compounds that have a structure in which four or more carbon-carbon double bonds and carbon-carbon single bonds are alternately arranged, and a combination thereof.

If the number of conjugated carbon-carbon double bonds is eight or more, the multilayered pipe may have the color of the conjugated polyene compound. From the standpoint of preventing such coloring, it is preferable to use a polyene compound that has seven or less conjugated carbon-carbon double bonds.

A plurality of sets of the above-described conjugated double bonds constituted by two or more carbon-carbon double bonds may also be included in one molecule of the conjugated polyene compound (e) without being conjugated with each other. For example, as is the case with tung oil, three conjugated trienes may be included in the same molecule of the conjugated polyene compound (e). The conjugated polyene compound (e) may also have another functional group (e.g., a carboxyl group or a salt thereof, a hydroxyl group, an ester group, a carbonyl group, an ether group, an amino group, an imino group, an amide group, a cyano group, a diazo group, a nitro group, a sulfone group or a salt thereof, a sulfonyl group, a sulfoxide group, a sulfide group, a thiol group, a phosphate group or a salt thereof, a phenyl group, a halogen atom, a double bond, or a triple bond).

In the present invention, the molecular weight of the conjugated polyene compound (e) is preferably 1000 or less, more preferably 500 or less, and further preferably 300 or less. If the molecular weight of the conjugated polyene compound is greater than 1000, it is difficult to uniformly disperse the conjugated polyene compound in the above-described EVOH (c), and the appearance of the multilayered pipe to be obtained may be impaired.

Examples of the conjugated polyene compound (e) include conjugated dienes that have two carbon-carbon double bonds, such as isoprene, 2,3-dimethyl-1,3-butadiene, 2,3-diethyl-1,3-butadiene, 2-t-butyl-1,3-butadiene, 1,3-pentadiene, 2,3-dimethyl-1,3-pentadiene, 2,4-dimethyl-1,3-pentadiene, 3,4-dimethyl-1,3-pentadiene, 3-ethyl-1,3-pentadiene, 2-methyl-1,3-pentadiene, 3-methyl-1,3-pentadiene, 4-methyl-1,3-pentadiene, 1,3-hexadiene, 2,4-hexadiene, 2,5-dimethyl-2,4-hexadiene, 1,3-octadiene, 1,3-cyclopentadiene, 1,3-cyclohexadiene, 1-phenyl-1,3-butadiene, 1,4-diphenyl-1,3-butadiene, 1-methoxy-1,3-butadiene, 2-methoxy-1,3-butadiene, 1-ethoxy-1,3-butadiene, 2-ethoxy-1,3-butadiene, 2-nitro-1,3-butadiene, chloroprene, 1-chloro-1,3-butadiene, 1-bromo-1,3-butadiene, 2-bromo-1,3-butadiene, fulvene, tropone, ocimene, phellandrene, myrcene, farnesene, cembrene, sorbic acid, a sorbic acid ester, a sorbic acid salt, and abietic acid; conjugated trienes that have three carbon-carbon double bonds, such as 1,3,5-hexatriene, 2,4,6-octatriene-1-carboxylic acid, eleostearic acid, tung oil, and cholecalciferol; and conjugated polyenes that have four or more carbon-carbon double bonds, such as cyclooctatetraene, 2,4,6,8-decatetraene-1-carboxylic acid, retinol, and retinoic acid; and a combination thereof. In particular, sorbic acid, sorbic acid esters, sorbic acid salts, and myrcene (e.g., β-myrcene), and a combination thereof are preferable as the conjugated polyene compound (e) because they are industrially widely used, are safe from a hygiene standpoint, are easily available, and are unlikely to oxidize under high temperature conditions, and sorbic acid, sorbic acid salts, and a mixture of these are more preferable.

The content of the conjugated polyene compound (e) that may be contained in the layer (C) is preferably 10 ppm to 1000 ppm, and more preferably 20 ppm to 500 ppm, relative to 100 parts by mass of the above-described EVOH (c). If the content of the conjugated polyene compound (e) is less than 10 ppm, the mechanical strength of the multilayered pipe to be obtained may be reduced due to oxidation degradation of the layer (C), and the generation of cracks, which may cause degradation of gas barrier properties, may be facilitated. If the content of the conjugated polyene compound (e) is more than 1000 ppm, the appearance of the multilayered pipe to be obtained may be impaired.

Phosphoric Acid Compound (f)

In the present invention, the layer (C) may also contain a phosphoric acid compound (f). If the phosphoric acid compound (f) is contained in the layer (C), melt-moldability and heat stability of the EVOH (c) contained in the layer (C) are improved, and generation of a gel-like material in the layer (C) and coloring of the layer (C) can be mitigated.

Examples of the above-described phosphoric acid compound (f) include phosphoric acid, phosphorus acid, salts of these, and a combination thereof, and the phosphates may be in the form of primary phosphates, secondary phosphates, or tertiary phosphates. Examples of cations that constitute phosphates include alkali metal ions and alkaline earth metal ions. More specific examples of the phosphoric acid compound (f) include phosphoric acid, sodium dihydrogen phosphate, potassium dihydrogen phosphate, disodium hydrogen phosphate, and dipotassium hydrogen phosphate, and a combination thereof, and phosphoric acid, sodium dihydrogen phosphate, and potassium dihydrogen phosphate are preferable.

The content of the phosphoric acid compound (f) that may be contained in the layer (C) is preferably 0.0002 parts by mass to 0.02 parts by mass in terms of the phosphorus element, more preferably 0.0003 parts by mass to 0.015 parts by mass, and further preferably 0.0005 parts by mass to 0.01 parts by mass, relative to 100 parts by mass of the above-described EVOH (c). If the content of the phosphoric acid compound (f) is in the above range, generation of a gel-like material in the layer (C) and coloring of the layer (C) can be effectively suppressed.

Boron Compound (g)

In the present invention, the layer (C) may also contain a boron compound (g). If the boron compound (g) is contained in the layer (C), melt viscosity of a resin composition that constitutes the layer (C) is improved, and dispersibility of the antioxidant (d) blended into the resin composition is improved.
Examples of the above-described boron compound (g) include: boric acids such as orthoboric acid, metaboric acid, and tetraboric acid; boric acid esters such as triethyl borate and trimethyl borate; boric acid salts such as alkali metal salts and alkaline earth metal salts of the aforementioned boric acids, and borax; and a combination thereof. Out of these, orthoboric acid is preferable.
The content of the boron compound (g) that may be contained in the layer (C) is preferably 0.002 parts by mass to 0.2 parts by mass in terms of the boron element, and more preferably 0.005 parts by mass to 0.1 parts by mass, relative to 100 parts by mass of the above-described EVOH (c). If the content of the boron compound (g) is in the above range, it is possible to manufacture a multilayered pipe that has the layer (C) in which the antioxidant (d) is uniformly dispersed.

Lubricant (h)

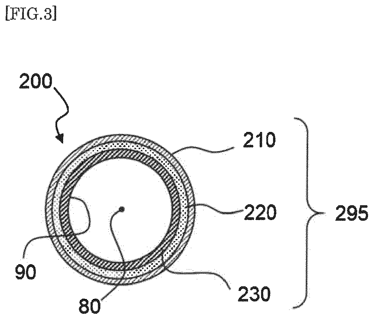

In the present invention, the layer (C) may also contain a lubricant (h). The lubricant (h) improves discharge stability and long-run properties in melt-molding and makes it possible to manufacture a first multilayered pipe with the layer (C) having a uniform thickness.
Examples of the lubricant (h) include: higher fatty acids such as lauric acid, myristic acid, palmitic acid, stearic acid, behenic acid, and oleic acid; metal salts of higher fatty acids such as aluminum salt, calcium salt, zinc salt, magnesium salt, and barium salt of higher fatty acids; esters of higher fatty acids such as methyl ester, isopropyl ester, butyl ester, and octyl ester of higher fatty acids; higher fatty acid amides such as saturated fatty acid amides (e.g., stearic acid amide and behenic acid amide), unsaturated fatty acid amides (e.g., oleic acid amide and erucic acid amide), bis fatty acid amides (e.g., ethylene bis stearic acid amide, ethylene bis oleic acid amide, ethylene bis erucic acid amide, and ethylene bis lauric acid amide); low molecular weight polyolefins such as low molecular weight polyethylene or low molecular weight polypropylene having a molecular weight of 500 to 10,000 or acid-modified compounds thereof, higher alcohols; ester oligomers; fluorinated ethylene resin; and a combination thereof. Out of these, higher fatty acids and/or metal salts, esters, and amides thereof are preferable.
The content of the lubricant (h) that may be contained in the layer (C) is preferably 0.001 parts by mass to 0.05 parts by mass, and more preferably 0.005 parts by mass to 0.03 parts by mass, relative to 100 parts by mass of the above-described EVOH (c). If the content of the lubricant (h) is in the above range, a first multilayered pipe with the layer (C) having a uniform thickness can be manufactured.
The layer (C) may also contain other components so long as the above-described EVOH (c) and the antioxidant (d) contained in the layer (C) are not adversely affected. Examples of other components include the above-described ultraviolet absorbing agents, plasticizers, antistatic agents, colorants, and fillers.
The thickness of the layer (C) of the first multilayered pipe according to the present invention is preferably 5 μm to 1000 μm, more preferably 10 μm to 500 μm, further preferably 15 μm to 150 μm, and particularly preferably 15 μm to 50 μm, for example. If the layer (C) is in the above range, cracks due to oxidation degradation are not generated in the layer (C), and the layer (C) can exhibit appropriate gas barrier properties.
In the present invention, in terms of imparting appropriate strength between the layers constituting the layered structure, it is preferable that the above-described layer (A) and the above-described layer (B) are layered in close contact with each other, and the layer (B) and the above-described layer (C) are layered in close contact with each other.
The first multilayered pipe according to the present invention may have either the configuration shown in FIG. 2 or the configuration shown in FIG. 3.
FIG. 2 is a cross-sectional view of the first multilayered pipe of the present invention taken along line A-A in FIG. 1(i).
In the first multilayered pipe 100 shown in FIG. 2, a layer (A) 110, a layer (B) 120, and a layer (C) 130 are layered in this order in a direction from the center toward the circumference around the center axis 80 via the hollow portion 90, and the layer (C) 130, the layer (B) 120, and the layer (A) 110 constitute the pipe main body 95. In the embodiment shown in FIG. 2, the layer (A) is arranged on the innermost side (i.e., constitutes the innermost layer).

FIG. 3 is a schematic cross-sectional view of another example of the first multilayered pipe according to the present invention.

In a first multilayered pipe 200 shown in FIG. 3, a layer (C) 230, a layer (B) 220, and a layer (A) 210 are layered in this order in a direction from the center toward the circumference around the center axis 80 via the hollow portion 90, and the layer (C) 230, the layer (B) 220, and the layer (A) 210 constitute a pipe main body 295. In the embodiment shown in FIG. 3, the layer (A) is arranged on the outermost side (i.e., constitutes the outermost layer).

The first multilayered pipe according to the present invention can be installed and used as is as a hot water circulation pipe (e.g., a floor heating pipe arranged under the floor of a house or a building).

Second Multilayered Pipe

A second multilayered pipe according to the present invention is a multilayered pipe (uncrosslinked pipe) that has an appearance similar to that of the first multilayered pipe shown in FIG. 1 and includes a hollow portion around a center axis. The second multilayered pipe according to the present invention is a multilayered pipe that has not yet been imparted with heat resistance and does not have sufficient heat resistance. Heat resistance can be imparted to the second multilayered pipe as a result of a portion of a layered structure being silane-crosslinked through heat treatment that is performed under high humidity conditions as described later. The second multilayered pipe according to the present invention is a semi-finished product, for example.

Similarly to the above-described first multilayered pipe (heat-resistant multilayered pipe), a cross section of the second multilayered pipe that is orthogonal to the center axis 80 is constituted by, for example, a combination of a hollow portion that has a circular shape, an elliptical shape, a circular shape or a polygonal shape, and a circular, elliptical, or polygonal external shape.

The second multilayered pipe according to the present invention has a layered structure that is arranged around the center axis, and includes a layer (A') that contains a silane crosslinkable polyolefin (a'), a layer (B) that contains an adhesive resin (b), and a layer (C) that contains an EVOH (c) and an antioxidant (d), and these layers are layered in this order.

(1) Layer (A')

The silane crosslinkable polyolefin (a') contained in the layer (A') is similar to that described as the material of the silane crosslinked polyolefin (a) contained in the layer (A) of the above-described first multilayered pipe. That is, the silane crosslinkable polyolefin (a') is a polyolefin that is obtained by grafting a silane compound onto a polyolefin.

The layer (A') may also contain other components in addition to the silane crosslinkable polyolefin (a'). Examples of other components include a free-radical generating agent, a silanol condensation catalyst, and other additives such as those described above (e.g., an ultraviolet absorbing agent, a plasticizer, an antistatic agent, a colorant, and a filler).

Examples of free-radical generating agents include dicumyl peroxide, benzoyl peroxide, 1,1-bis(t-butylperoxy)-3,3,5-trimethylcyclohexane, t-butylperoxyisopropylcarbonate, t-butylperoxybenzoate, 2,5-dimethyl-2,5-bis(benzoylperoxy)hexane, methyl ethyl ketone peroxide, 2,2-bis(t-butylperoxy)butane, and cumenehydroperoxide, and a combination thereof.

Examples of silanol condensation catalysts include dibutyltin dilaurate, dioctyltin dilaurate, dibutyltin diacetate, dibutyltin dioctoate, dioctyltin dioctoate, dibutyltin dineodecanoate, dioctyltin dineodecanoate, stannous acetate, stannous caprylate, tin bisneodecanoate, zinc caprylate, zinc naphthenate, cobalt naphthenate, and tetra-i-propoxy titanium, and a combination thereof.

Contents of these other components in the layer (A') can be selected as appropriate by those skilled in the art within ranges in which these components do not impair heat resistance that can be exhibited as a result of the above-described silane crosslinkable polyolefin (a') being silane-crosslinked.

The thickness of the layer (A') of the second multilayered pipe according to the present invention is preferably 100 μm to 20,000 μm, more preferably 200 μm to 5,000 μm, and further preferably 300 μm to 3,000 μm, for example. If the layer (A') is in the above range, substantially uniform silane cross-links can be formed over the entire layer (A').

(2) Layer (B) and Layer (C)

The layers (B) and (C) of the second multilayered pipe according to the present invention are similar to the layers (B) and (C) constituting the above-described first multilayered pipe.

The thickness of the layer (B) of the second multilayered pipe according to the present invention is preferably 5 μm to 200 μm, more preferably 10 μm to 100 μm, and further preferably 20 μm to 80 μm, for example. If the layer (B) is in the above range, the layer (B) can favorably adhere to other layers when the layer (B) and the other layers are layered. The thickness of the layer (C) of the second multilayered pipe according to the present invention is preferably

5 μm to 1000 μm, more preferably 10 μm to 500 μm, and further preferably 15 μm to 150 μm, for example. If the thickness of the layer (C) is in the above range, cracks due to oxidation degradation are not generated, and appropriate gas barrier properties can be exhibited.

In the present invention, in terms of imparting appropriate strength between the layers constituting the layered structure, it is preferable that the above-described layer (A') and the above-described layer (B) are layered in close contact with each other, and the layer (B) and the above-described layer (C) are layered in close contact with each other.

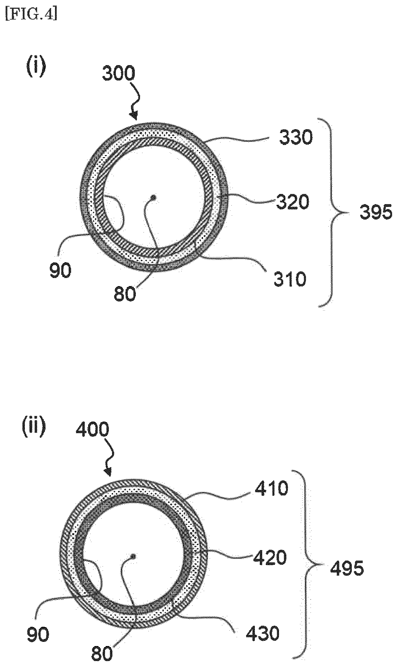

The second multilayered pipe according to the present invention may have either the configuration shown in FIG. 4(i) or the configuration shown in FIG. 4(ii).

FIG. 4 shows schematic cross-sectional views of examples of the second multilayered pipe according to the present invention.

In a second multilayered pipe 300 shown in FIG. 4(i), a layer (A') 310, a layer (B) 320, and a layer (C) 330 are layered in this order in a direction from the center toward the circumference around the center axis 80 via the hollow portion 90, and the layer (A') 310, the layer (B) 320, and the layer (C) 330 constitute a pipe main body 395. In the embodiment shown in FIG. 4(i), the layer (A') is arranged on the innermost side (i.e., constitutes the inner most layer).

In contrast, in a second multilayered pipe 400 shown in FIG. 4(ii), a layer (C) 430, a layer (B) 420, and a layer (A') 410 are layered in this order in a direction from the center toward the circumference around the center axis 80 via the hollow portion 90, and the layer (C) 430, the layer (B) 420, and the layer (A') 410 constitute a pipe main body 495. In the embodiment shown in FIG. 4(ii), the layer (A') is arranged on the outermost side (i.e., constitutes the outermost layer).

The second multilayered pipe according to the present invention can be used as a semi-finished product that is used to manufacture a hot water circulation pipe (e.g., a floor heating pipe to be arranged under the floor of a house or a building). The above-described first multilayered pipe (heat-resistant multilayered pipe) can be manufactured using the second multilayered pipe according to the present invention, as described later.

Although there is no particular limitation on the method for manufacturing the second multilayered pipe according to the present invention, the second multilayered pipe can be manufactured by mixing materials that constitute the layers (A'), (B), and (C) in advance using a mixing means (e.g., a ribbon blender, a high-speed mixer, a Ko-kneader, a mixing roll, an extruder, or an intensive mixer), which is well known for those skilled in the art, and using a multilayered pipe manufacturing line that includes a single-layer pipe manufacturing line for forming the layer (A') or (C) and is equipped with coextrusion coating equipment for forming the remaining layers (B) and (C) or layers (B) and (A'). Alternatively, the second multilayered pipe can be manufactured by using a coextrusion molding line that includes the same number of extruders as the number of types of resin layer and in which resins that are molten in the extruders are simultaneously extruded using a circular multilayered die so as to form layers overlaid on each other. Conditions that are set in the manufacturing line when manufacturing the second multilayered pipe of the present invention can be appropriately selected by those skilled in the art.

Method for Manufacturing First Multilayered Pipe

Next, a method for manufacturing the first multilayered pipe (heat-resistant multilayered pipe) according to the present invention by using the second multilayered pipe according to the present invention will be described.

In the manufacturing method according to the present invention, heat resistance can be imparted to a multilayered pipe by silane-crosslinking the silane crosslinkable polyolefin (a') contained in the above-described second multilayered pipe.

The silane-crosslinking can be performed by subjecting the silane crosslinkable polyolefin (a') contained in the layer (A') constituting the second multilayered pipe to heat treatment under high humidity conditions. Heat treatment can be performed on the silane crosslinkable polyolefin (a') under high humidity conditions by, for example, exposing the silane crosslinkable polyolefin (a') to water vapor of a humidity of 80%RH or higher and 50°C or higher, or exposing the silane crosslinkable polyolefin (a') to hot water of 50°C or higher.

If the layer (A') 310 containing the silane crosslinkable polyolefin (a') constitutes the innermost layer of the multilayered pipe 300 as shown in FIG. 4(i), for example, heat treatment can be carried out under high humidity conditions by using a method of passing water vapor or hot water only through the hollow portion 90, a method of placing the multilayered pipe 300 within a chamber at a predetermined temperature and a predetermined humidity and exposing the multilayered pipe 300 to water vapor, or a method of immersing the multilayered pipe 300 in hot water at a predetermined temperature, and the method of placing the multilayered pipe 300 within a chamber at a predetermined temperature and a predetermined humidity and exposing the multilayered pipe 300 to water vapor and the method of immersing the multilayered pipe 300 in hot water at a predetermined temperature are preferable. If the above-described methods are employed, not only the productivity can be increased, but also generation of cracks due to a temperature difference between an inner layer and an outer layer of the multilayered pipe can be prevented, for example, and appropriate gas barrier properties can be exhibited. Alternatively, if the layer (A') 410 containing the silane crosslinkable polyolefin (a') constitutes the outermost layer of the multilayered pipe 400 as shown in FIG. 4(ii), heat treatment can be carried out under high humidity conditions by using a method of placing the multilayered pipe 400 within a chamber at a predetermined temperature and a predetermined humidity and exposing the multilayered pipe 400 to water vapor or a method of immersing the multilayered pipe 400 in hot water at a predetermined temperature.

Through such heat treatment performed under high humidity conditions, a silanol condensation reaction occurs in the silane crosslinkable polyolefin (a') contained in the layer (A'), and the silane crosslinked polyolefin (a) can be obtained.

The above-described manufacturing method of the first multilayered pipe according to the present invention can be performed not only in a factory in which the first multilayered pipe is manufactured but also at a construction site of a house, a building, or the like in which a hot water circulation pipe is to be installed. In the latter case, for example, provisional installation of a hot water circulation pipe is performed using the second multilayered pipe according to the present invention. Thereafter, the silane crosslinkable polyolefin (a') contained in the layer (A') is silane-crosslinked by subjecting the inside or the outer circumferential surface of the installed multilayered pipe to the above-described heat treatment under high humidity conditions, and thus a desired heat-resistant multilayered pipe can be manufactured at a construction site.

As described above, if the second multilayered pipe according to the present invention is used, the antioxidant (d) contained in the layer (C) of the multilayered pipe can be prevented from bleeding out when silane-crosslinking the silane crosslinkable polyolefin (a') contained in the layer (A') to improve heat resistance of the multilayered pipe. As a result, generation of undesirable aldehyde through heat degradation of the EVOH (c) contained in the layer (C) can be suppressed and formation of voids or bubbles, which cause cracking of the multilayered pipe, can be suppressed in the layer (C), and therefore a heat-resistant multilayered pipe having improved quality can be provided.

The first multilayered pipe according to the present invention is used as a pipe, such as a hot water circulation pipe (e.g., a floor heating pipe arranged under the floor of a house or a building), through which a high-temperature fluid passes, and can suppress generation of cracks and exhibit excellent gas barrier properties.

[Examples]

The following more specifically describes the present invention using examples, but the present invention is not limited to these examples. Those examples where the antioxidant does not satisfy the requirements of molecular weight MW of 500 to 800 are considered as embodiments which do not fall within the present invention. Accordingly, Examples 1 and 10 are reference examples.

Examples 1 to 9 and 13 to 15

EVOH pellets and an antioxidant were dry-blended in amounts shown in Table 2, and were blended and formed into pellets using a corotating twin-screw extruder of 30 mm$\varphi$ ("TEX-30N" manufactured by The Japan Steel Works, Ltd.) at an extrusion temperature of 220°C to obtain a resin material of the layer (C). With respect to each of the layers (A'), (B), and (C), a molten resin that was obtained by melting materials shown in Table 2 using an extruder was supplied to a circular multilayered die, and the resins were coextruded from the multilayered die to obtain an uncrosslinked multilayered pipe. In Example 15, 50 ppm of sorbic acid was further added relative to 100 parts by mass of EVOH. Discharge amounts of materials per unit time were 225 g/minute for the resin constituting the layer (A'), 8.66 g/minute for the resin constituting the layer (B), and 17.0 g/minute (Examples 1 to 9) or 17.3 g/minute (Examples 13 and 14) for the resin constituting the layer (C), and the pipe drawing speed was 3.0 m/minute. In the obtained uncrosslinked multi-layered pipe, the layer (A'), the layer (B), and the layer (C) were layered in this order around a center axis, with the layer (A') arranged on the innermost side, and the uncrosslinked multilayered pipe had an inner diameter of 50 mm and a thickness of 0.55 mm. The layer (A') had a thickness of 500 $\mu$m, the layer (B) had a thickness of 20 $\mu$m, and the layer (C) had a thickness of 30 $\mu$m.

Then, the silane crosslinkable polyolefin contained in the layer (A') was silane-crosslinked by leaving the uncrosslinked multilayered pipe to stand for 8 hours in an autoclave that was charged with saturated water vapor (humidity: 100%RH) at 80°C and 480 mBar (silane-crosslinking (1)), and thus silane crosslinked multilayered pipes (crosslinked pipes) (E1 to E9, E13, and E15) were each obtained.

Example 10

An uncrosslinked multilayered pipe in which the layer (A'), the layer (B), and the layer (C) were layered in this order around a center axis and the layer (A') was arranged on the innermost side was obtained in the same manner as that in Example 1 except that materials shown in Table 2 were used for the layers (A'), (B), and (C).

Then, the silane crosslinkable polyolefin contained in the layer (A') was silane-crosslinked by leaving the uncrosslinked multilayered pipe to stand for 12 hours in a constant temperature chamber at 90°C and a relative humidity of 95%RH (silane-crosslinking (2)), and thus a silane crosslinked multilayered pipe (crosslinked pipe) (E10) was obtained.

Example 11

An uncrosslinked multilayered pipe in which the layer (A'), the layer (B), and the layer (C) were layered in this order around a center axis and the layer (A') was arranged on the innermost side was obtained in the same manner as that in Example 1 except that materials shown in Table 2 were used for the layers (A'), (B), and (C).
Then, the silane crosslinkable polyolefin contained in the layer (A') was silane-crosslinked by immersing the uncrosslinked multilayered pipe in hot water at 70°C for 30 hours (silane-crosslinking (3)), and thus a silane crosslinked multilayered pipe (crosslinked pipe) (E11) was obtained.

Example 12

An uncrosslinked multilayered pipe in which the layer (A'), the layer (B), and the layer (C) were layered in this order around a center axis and the layer (A') was arranged on the innermost side was obtained in the same manner as that in Example 1 except that materials shown in Table 2 were used for the layers (A'), (B), and (C).
Then, the silane crosslinkable polyolefin contained in the layer (A') was silane-crosslinked by passing hot water at 90°C through the uncrosslinked multilayered pipe for 19 hours and then drying the multilayered pipe (silane-crosslinking (4)), and thus a silane crosslinked multilayered pipe (crosslinked pipe) (E12) was obtained.

Comparative Examples 1 to 5

An uncrosslinked multilayered pipe in which the layer (A'), the layer (B), and the layer (C) were layered in this order around a center axis and the layer (A') was arranged on the innermost side was obtained in the same manner as that in Example 1 except that materials shown in Table 2 were used for the layers (A'), (B), and (C).
Then, the silane crosslinkable polyolefin contained in the layer (A') was silane-crosslinked by leaving the uncrosslinked multilayered pipe to stand for 8 hours in an autoclave that was charged with saturated water vapor (humidity: 100%RH) at 80°C and 480 mBar (silane-crosslinking (1)), and thus silane crosslinked multilayered pipes (crosslinked pipes) (CE1 to CE5) were each obtained.

Table 2

| | Layer (A') | Layer (B) | Layer (C) | | | | | | | | | Crosslinking Conditions |
|---|---|---|---|---|---|---|---|---|---|---|---|---|
| | Silane Crosslinkable PE | Adhesive Resin | EVOH | | | | Antioxidant | | | | | |
| | | | Type | Ethylene Content | Saponification Degree | MFR@210°C[5] | Type[6] | SP[7] | MW[8] | SP/√MW | Amount[9] | |
| Example 1 | XHE740N[1] | NF498E[2] | EVOH (1)[3] | 32 mol% | 99.9 mol% | 3.8g/10min. | Irganox 1010 | 11.0 | 1178 | 0.320 | 0.5 | Silane-Crosslinking (1) |
| Example 2 | XHE740N[1] | NF498E[2] | EVOH (1)[3] | 32 mol% | 99.9 mol% | 3.8g/10 min. | Irganox 1330 | 10.9 | 775 | 0.392 | 0.5 | Silane-Crosslinking (1) |
| Example 3 | XHE740N[1] | NF498E[2] | EVOH (1)[3] | 32 mol% | 99.9 mol% | 3.8g/10 min. | Irganox 1076 | 9.59 | 531 | 0.416 | 0.5 | Silane-Crosslinking (1) |
| Example 4 | XHE740N[1] | NF498E[2] | EVOH (1)[3] | 32 mol% | 99.9 mol% | 3.8g/10 min. | Irganox 1035 | 10.9 | 643 | 0.430 | 0.5 | Silane-Crosslinking (1) |
| Example 5 | XHE740N[1] | NF498E[2] | EVOH (1)[3] | 32 mol% | 99.9 mol% | 3.8g/10 min. | Irganox 1726 | 9.97 | 537 | 0.430 | 0.5 | Silane-Crosslinking (1) |
| Example 6 | XHE740N[1] | NF498E[2] | EVOH (1)[3] | 32 mol% | 99.9 mol% | 3.8g/10 min. | Irganox 3114 | 12.3 | 784 | 0.439 | 0.5 | Silane-Crosslinking (1) |
| Example 7 | XHE740N[1] | NF498E[2] | EVOH (1)[3] | 32 mol% | 99.9 mol% | 3.8g/10 min. | Irganox 565 | 10.9 | 589 | 0.449 | 0.5 | Silane-Crosslinking (1) |
| Example 8 | XHE740N[1] | NF498E[2] | EVOH (1)[3] | 32 mol% | 99.9 mol% | 3.8g/10 min. | Irganox 3114 | 12.3 | 784 | 0.439 | 1 | Silane-Crosslinking (1) |
| Example 9 | XHE740N[1] | NF498E[2] | EVOH (1)[3] | 32 mol% | 99.9 mol% | 3.8g/10 min. | Irganox 565 | 10.9 | 589 | 0.449 | 1 | Silane-Crosslinking (1) |

(continued)

| | Layer (A') | Layer (B) | Layer (C) | | | | | | | | | | Crosslinking Conditions |
|---|---|---|---|---|---|---|---|---|---|---|---|---|---|
| | Silane Crosslinkable PE | Adhesive Resin | EVOH | | | | Antioxidant | | | | | | |
| | | | Type | Ethylene Content | Saponification Degree | MFR@210°C[5] | Type[6] | SP[7] | MW[8] | SP/√MW | Amount[9] | | |
| Example 10 | XHE740N[1] | NF498E[2] | EVOH (1)[3] | 32 mol% | 99.9 mol% | 3.9g/10 min. | Irganox 1010 | 11.0 | 1178 | 0.320 | 0.5 | | Silane-Crosslinking (2) |
| Example 11 | XHE740N[1] | NF498E[2] | EVOH (1)[3] | 32 mol% | 99.9 mol% | 3.9g/10 min. | Irganox 1035 | 10.9 | 643 | 0.430 | 0.5 | | Silane-Crosslinking (3) |
| Example 12 | XHE740N[1] | NF498E[2] | EVOH (1)[3] | 32 mol% | 99.9 mol% | 3.9g/10 min. | Irganox 3114 | 12.3 | 784 | 0.439 | 0.5 | | Silane-Croslinking (4) |
| Example 13 | XHE740N[1] | NF498E[2] | EVOH (2)[4] | 27 mol% | 99.9 mol% | 3.9g/10 min. | Irganox 1076 | 9.59 | 531 | 0.416 | | | Silane-Crosslinking (1) |
| Example 14 | XHE740N[1] | NF498E[2] | EVOH (2)[4] | 27 mol% | 99.9 mol% | 3.9g/10 min. | Irganox 565 | 10.9 | 589 | 0.449 | 0.5 | | Silane-Crosslinking (1) |
| Example 15 | XHE740N[1] | NF498E[2] | EVOH (1)[3] | 32 mol% | 99.9 mol% | 3.8g/10 min. | Irganox 3114 | 12.3 | 784 | 0.439 | 0.5 | | Silane-Crosslinking (1) |
| C. Exam 1 | XHE740N[1] | NF498E[2] | EVOH (1)[3] | 32 mol% | 99.9 mol% | 3.8g/10 min. | Irganox 1098 | 11.4 | 637 | 0.452 | 0.5 | | Silane-Crosslinking (1) |
| C. Exam 2 | XHE740N[1] | NF498E[2] | EVOH (1)[3] | 32 mol% | 99.9 mol% | 3.8g/10 min. | Irganox 5057 | 8.99 | 394 | 0.453 | 0.5 | | Silane-Crosslinking (1) |
| C. Exam 3 | XHE740N[1] | NF49BE[2] | EVOH (1)[3] | 32 mol% | 99.9 mol% | 3.8g/10 min. | Irganox 245 | 11.3 | 587 | 0.466 | 0.5 | | Silane-Crosslinking (1) |

EP 3 650 217 B1

16

| | Layer (A') | Layer (B) | Layer (C) | | | | | | | | | | Crosslinking Conditions |
|---|---|---|---|---|---|---|---|---|---|---|---|---|---|
| | Silane Crosslinkable PE | Adhesive Resin | EVOH | | | | Antioxidant | | | | | | |
| | | | Type | Ethylene Content | Saponification Degree | MFR@210°C[5] | Type[6] | SP[7] | MW[8] | SP/√MW | Amount[9] | | |
| C. Exam 4 | XHE740N[1] | NF498E[2] | EVOH (1)[3] | 32 mol% | 99.9 mol% | 3.8g/10 min. | Irganox 1520 | 10.4 | 428 | 0.503 | 0.5 | | Silane-Crosslinking (1) |
| C. Exam 5 | XHE740N[1] | NF498E[2] | EVOH (1)[3] | 32 mol% | 99.9 mol% | 3.8g/10 min. | Irganox 1135 | 9.99 | 391 | 0.505 | 0.5 | | Silane-Crosslinking (1) |

1) Silane crosslinkable polyethylene (Mitsubishi Chemical, Linklon XHE740N; Density 0.95g/cm$^3$)

2) Adhesive resin (Mitsui Chemicals, ADMER NF498E; Density 0.91g/cm$^3$)

3) Kuraray F101B; Density 1.19g/cm$^3$

4) Kuraray L171B; Density 1.21g/cm$^3$

5) Melt flow rate at 210 °C 6) All were manufactured by BASF 7) Solubility parameter 8) Molecular weight 9) Expressed in parts by mass with respect to 100 parts by mass of EVOH used

EP 3 650 217 B1

The multilayered pipes (crosslinked pipes) E1 to E15 and CE1 to CE5 obtained in Examples 1 to 15 and Comparative Examples 1 to 5 were each evaluated in terms of the following points.

Oxygen Barrier Properties

Oxygen barrier properties were measured by completely sealing one end of the obtained multilayered pipe (crosslinked pipe) using a silicone rubber plug and an adhesive, and connecting an oxygen permeation amount measurement device (OX-TRAN-10/50A manufactured by Modern Control Corp.) to the other open end of the multilayered pipe. Obtained results are shown in Table 3.

Heat Stability

Films (thickness: 100 μm) corresponding to the layers (C) constituting the multilayered pipes (crosslinked pipes) E1 to E15 and CE1 to CE5 obtained as described above were produced using ethylene-vinyl alcohol copolymers and antioxidants shown in Table 2.
Heat treatment was performed at 120°C, 130°C, and 140°C on each film in accordance with ISO 2578:1993, and with respect to each sample that was subjected to the heat treatment at any of the temperatures, a heat treatment time with which the fracture elongation of the sample after heat treatment decreased to 1/4 of the tensile elongation of the sample before heat treatment was determined, and the time it took for the tensile elongation to decrease to 1/4 at 80°C was calculated as an index of heat stability using an Arrhenius plot. Obtained results are shown in Table 3.

Bleed Out Amount

The obtained multilayered pipe (crosslinked pipe) was immersed in an ethanol bath at 20°C for 30 seconds and was then washed to remove powder that was attached to a surface of the layer (C), and an ethanol liquid used for washing was collected. Then, ethanol was distilled away from the collected ethanol liquid, the mass of the residue (bled out antioxidant) was measured, and the ratio $\times$ (mass%) of the antioxidant bled out during the manufacture of the multilayered pipe (crosslinked pipe) was calculated using the following formula.

$$x = m/(w \times a \times c)$$

In the formula, m represents the mass of the collected residue (antioxidant), w represents the mass of the obtained multilayered pipe per unit length, a represents the mass fraction (mass%) of the ethylene-vinyl alcohol copolymer contained in the multilayered pipe (crosslinked pipe), and c represents the mass fraction (mass%) of the antioxidant relative to the EVOH in the multilayered pipe (crosslinked pipe). Obtained results are shown in Table 3.
Note that the above-described mass fraction a (mass%) of the EVOH contained in the multilayered pipe was calculated as a value a'X/(LW) by multiplying the discharge amount X (kg/minute) of the material of the layer (C) containing the EVOH and the antioxidant per unit time in the formation of the layer (C) by the mass fraction a' (mass%) of the EVOH contained in the material, dividing the obtained product by the pipe drawing speed L (m/minute), and dividing the thus obtained mass a'X/L (kg/m) of EVOH units contained per unit length of the multilayered pipe by the dry mass W (kg/m) of the pipe per unit length. These values are also shown in Table 3.

Table 3

| | Multilayered Pipe (Crosslinked Pipe) | Oxygen Barrier Properties [cc/m$^2$·day·atm] | Heat Stability [years] | Bleed Out Amount [mass%] | Mass per Unit Length[1)] [g] | Mass of Collected Antioxidant[2)] [mg] | EVOH in Multilayered Pipe [3)] [mass%] | Antioxidant relative to EVOH[4)] [mass%] |
|---|---|---|---|---|---|---|---|---|
| Example 1 | E1 | 0.052 | 50 | 0 | 83.6 | 0.0 | 6.75 | 0.50 |
| Example 2 | E2 | 0.053 | 55 | 0 | 83.6 | 0.0 | 6.75 | 0.50 |
| Example 3 | E3 | 0.055 | 64 | 0 | 83.6 | 0.0 | 6.75 | 0.50 |
| Example 4 | E4 | 0.057 | 62 | 0 | 83.6 | 0.0 | 6.75 | 0.50 |
| Example 5 | E5 | 0.057 | 60 | 0 | 83.6 | 0.0 | 6.75 | 0.50 |
| Example 6 | E6 | 0.060 | 62 | 0 | 83.6 | 0.0 | 6.75 | 0.50 |
| Example 7 | E7 | 0.061 | 62 | 0 | 83.6 | 0.0 | 6.75 | 0.50 |
| Example 8 | E8 | 0.068 | 65 | 0 | 83.6 | 0.0 | 6.71 | 1.0 |
| Example 9 | E9 | 0.072 | 67 | 0 | 83.6 | 0.0 | 6.71 | 1.0 |
| Example 10 | E10 | 0.052 | 50 | 0 | 83.6 | 0.0 | 6.75 | 0.50 |
| Example 11 | E11 | 0.057 | 63 | 0 | 83.6 | 0.0 | 6.75 | 0.50 |
| Example 12 | E12 | 0.097 | 62 | 0 | 83.6 | 0.0 | 6.75 | 0.50 |
| Example 13 | E13 | 0.032 | 51 | 0 | 83.7 | 0.0 | 6.86 | 0.50 |
| Example 14 | E14 | 0.035 | 54 | 0 | 83.7 | 0.0 | 6.86 | 0.50 |

(continued)

| | Multilayered Pipe (Crosslinked Pipe) | Oxygen Barrier Properties [cc/m$^2$·day·atm] | Heat Stability [years] | Bleed Out Amount [mass%] | Mass per Unit Length[1] [g] | Mass of Collected Antioxidant[2] [mg] | EVOH in Multilayered Pipe [3] [mass%] | Antioxidant relative to EVOH[4] [mass%] |
|---|---|---|---|---|---|---|---|---|
| Example 15 | E15 | 0.054 | 64 | 0 | 83.6 | 0.0 | 6.75 | 0.50 |
| C. Exam 1 | CE1 | 0.234 | 24 | 6 | 83.6 | 17.3 | 6.75 | 0.50 |
| C. Exam 2 | CE2 | 0.288 | 18 | 8 | 83.6 | 23.1 | 6.75 | 0.50 |
| C. Exam 3 | CE3 | 0.588 | 13 | 57 | 83.6 | 165 | 6.75 | 0.50 |
| C. Exam 4 | CE4 | 0.600 | 8.5 | 72 | 83.6 | 208 | 6.75 | 0.50 |
| C. Exam 5 | CE5 | 0.617 | 7.5 | 74 | 83.6 | 214 | 6.75 | 0.50 |

1) Dry mass of the obtained multilayered pipe (crosslinked pipe) per unit length
2) Mass of the collected antioxidant
3) Mass fraction of the EVOH contained in the multilayered pipe (crosslinked pipe)
4) Mass fraction of the antioxidant relative to the EVOH

As shown in Tables 2 and 3, although different antioxidants were used and silane-crosslinking was performed under different conditions in Examples 1 to 15, bleeding out of the antioxidants was not observed on the surface of the layer (C) in all of the multilayered pipes (crosslinked pipes) E1 to E15 obtained in these examples, and these multilayered pipes had excellent oxygen barrier properties and excellent heat stability. In contrast, bleeding out of antioxidants occurred in the multilayered pipes (crosslinked pipes) CE1 to CE5 obtained in Comparative Examples 1 to 5, and these multilayered pipes were significantly inferior to those obtained in Examples 1 to 15 in the oxygen barrier properties and heat stability. It can be found that whether the solubility parameter (SP) and the molecular weight (MW) of the antioxidants used satisfied the following Expression (I), for example:

$$\frac{SP}{\sqrt{MW}} \leq 0.450 \ (cal \cdot mol/g \cdot cm^3)^{1/2} \qquad (I)$$

is affected to whether or not bleeding out occurred and to whether the oxygen barrier properties and heat stability were good or bad in Examples 1 to 15 and Comparative Examples 1 to 5.

[Industrial Applicability]

According to the present invention, a multilayered pipe that can suppress generation of cracks and have excellent gas barrier properties can be provided. The multilayered pipe according to the present invention can be advantageously used in the field of resin molding and the field of architecture, for example.

[List of Reference Numerals]

| | |
|---|---|
| 80 | center axis |
| 90 | hollow portion |
| 95, 295, 395, 495 | pipe main body |
| 100, 200 | first multilayered pipe |
| 110, 210 | layer (A) |
| 120, 220, 320, 420 | layer (B) |
| 130, 230, 330, 430 | layer (C) |
| 300, 400 | second multilayered pipe |
| 310, 410 | layer (A') |

**Claims**

1. A multilayered pipe comprising a layer (A) that contains a silane crosslinked polyolefin (a), a layer (B) that contains an adhesive resin (b), and a layer (C) that contains an ethylene-vinyl alcohol copolymer (c) and an antioxidant (d), the layers (A), (B), and (C) being layered in this order around a center axis of the multilayered pipe, wherein, in the layer (C),

   the ethylene-vinyl alcohol copolymer (c) has an ethylene unit content of 15 mol% to 50 mol% and a saponification degree of 90 mol% or more,
   the antioxidant (d) is contained at a ratio of 0.1 parts by mass to 5 parts by mass relative to 100 parts by mass of the ethylene-vinyl alcohol copolymer (c), has a molecular weight MW of 500 to 800, and
   the antioxidant (d) satisfies a relationship expressed by the following Expression (I):

$$\frac{SP}{\sqrt{MW}} \leq 0.450 \ (cal \cdot mol/g \cdot cm^3)^{1/2} \qquad (I)$$

   where SP represents a solubility parameter of the antioxidant (d), wherein the method for the determination of SP is indicated in the description, and MW represents a molecular weight of the antioxidant (d),
   wherein the layer (C) contains a conjugated polyene compound (e) in an amount of 10 ppm to 1000 ppm relative to 100 parts by mass of the ethylene-vinyl alcohol copolymer (c).

2. The multilayered pipe according to claim 1, wherein the antioxidant (d) satisfies a relationship expressed by the following Expression (I'):

$$0.250 \leq \frac{SP}{\sqrt{MW}} \leq 0.450 \ (cal \cdot mol/g \cdot cm^3)^{1/2} \quad (I').$$

3. The multilayered pipe according to claim 1 or 2, wherein the layer (A) and the layer (B) are layered in close contact with each other, and the layer (B) and the layer (C) are layered in close contact with each other.

4. The multilayered pipe according to any one of claims 1 to 3, wherein the layer (A) is arranged as an innermost layer or an outermost layer.

5. The multilayered pipe according to any one of claims 1 to 4, wherein the silane crosslinked polyolefin (a) contained in the layer (A) is obtained by silane-crosslinking a silane crosslinkable polyolefin (a') by subjecting the silane crosslinkable polyolefin (a') to an atmosphere of water vapor of a humidity of 80%RH or higher and 50°C or higher, or hot water of 50°C or higher.

6. A multilayered pipe comprising a layer (A') that contains a silane crosslinkable polyolefin (a'), a layer (B) that contains an adhesive resin (b), and a layer (C) that contains an ethylene-vinyl alcohol copolymer (c) and an antioxidant (d), the layers (A'), (B), and (C) being layered in this order around a center axis of the multilayered pipe,

wherein the layer (A') is arranged as an innermost layer or an outermost layer, in the layer (C),
the ethylene-vinyl alcohol copolymer (c) has an ethylene unit content of 15 mol% to 50 mol% and a saponification degree of 90 mol% or more,
the antioxidant (d) is contained at a ratio of 0.1 parts by mass to 5 parts by mass relative to 100 parts by mass of the ethylene-vinyl alcohol copolymer (c), has a molecular weight MW of 500 to 800, and
the antioxidant (d) satisfies a relationship expressed by the following Expression (I):

$$\frac{SP}{\sqrt{MW}} \leq 0.450 \ (cal \cdot mol/g \cdot cm^3)^{1/2} \quad (I)$$

where SP represents a solubility parameter of the antioxidant (d), wherein the method for the determination of SP is indicated in the description, and MW represents a molecular weight of the antioxidant (d),
wherein the layer (C) contains a conjugated polyene compound (e) in an amount of 10 ppm to 1000 ppm relative to 100 parts by mass of the ethylene-vinyl alcohol copolymer (c).

7. The multilayered pipe according to claim 6, wherein the antioxidant (d) satisfies a relationship expressed by the following Expression (I'):

$$0.250 \leq \frac{SP}{\sqrt{MW}} \leq 0.450 \ (cal \cdot mol/g \cdot cm^3)^{1/2} \quad (I').$$

8. The multilayered pipe according to claim 6 or 7, wherein the layer (A') and the layer (B) are layered in close contact with each other, and the layer (B) and the layer (C) are layered in close contact with each other.

9. A method for manufacturing the multilayered pipe according to any one of claims 1 to 5, comprising silane-crosslinking the silane crosslinkable polyolefin (a') contained in the multilayered pipe according to any one of claims 6 to 8.

10. The method for manufacturing the multilayered pipe according to claim 9, wherein the silane-crosslinking is carried out by subjecting the silane crosslinkable polyolefin (a') contained in the multilayered pipe to an atmosphere of water vapor of a humidity of 80%RH or higher and 50°C or higher, or hot water of 50°C or higher.

11. A method for preventing an antioxidant (d) from bleeding out from a multilayered pipe that contains a silane crosslinkable polyolefin (a') and the antioxidant (d) when improving heat resistance of the multilayered pipe, the method comprising silane-crosslinking the silane crosslinkable polyolefin (a') contained in the multilayered pipe, by using the multilayered pipe according to any one of claims 6 to 8.

12. The method according to claim 11, wherein the silane-crosslinking is carried out by subjecting the silane crosslinkable polyolefin (a') contained in the multilayered pipe to an atmosphere of water vapor of a humidity of 80%RH or higher and 50°C or higher, or hot water of 50°C or higher.

**Patentansprüche**

1. Mehrschichtiges Rohr, umfassend eine Schicht (A), die ein Silan-vernetztes Polyolefin (a) enthält, eine Schicht (B), die ein Klebstoffharz (b) enthält, und eine Schicht (C), die ein Ethylen-Vinylalkohol-Copolymer (c) und ein Antioxidationsmittel (d) enthält, wobei die Schichten (A), (B) und (C) in dieser Reihenfolge um eine Zentralachse des mehrschichtigen Rohrs geschichtet sind, wobei, in der Schicht (C),

das Ethylen-Vinylalkohol-Copolymer (c) einen Ethyleneinheiten-Gehalt von 15 Mol% bis 50 Mol% und einen Verseifungsgrad von 90 Mol% oder mehr aufweist, das Antioxidationsmittel (d) in einem Anteil von 0,1 Massenteilen bis 5 Massenteilen, bezogen auf 100 Massenteile des Ethylen-Vinylalkohol-Copolymers (c), enthalten ist, ein Molekulargewicht MW von 500 bis 800 aufweist,
und
das Antioxidationsmittel (d) einer Beziehung genügt, ausgedrückt durch den folgenden Ausdruck (I):

$$\frac{SP}{\sqrt{MW}} \leq 0.450 \ (\text{cal} \cdot \text{mol/g} \cdot \text{cm}^3)^{1/2} \quad (I)$$

wobei SP einen Löslichkeitsparameter des Antioxidationsmittels (d) darstellt, wobei das Verfahren zur Bestimmung von SP in der Beschreibung angegeben ist, und MW ein Molekulargewicht des Antioxidationsmittels (d) darstellt,
wobei die Schicht (C) eine konjugierte Polyenverbindung (e) in einer Menge von 10 ppm bis 1000 ppm, bezogen auf 100 Massenteile des Ethylen-Vinylalkohol-Copolymers (c), enthält.

2. Mehrschichtiges Rohr nach Anspruch 1, wobei das Antioxidationsmittel (d) einer Beziehung genügt, ausgedrückt durch den folgenden Ausdruck (I'):

$$0.250 \leq \frac{SP}{\sqrt{MW}} \leq 0.450 \ (\text{cal} \cdot \text{mol/g} \cdot \text{cm}^3)^{1/2} \quad (I').$$

3. Mehrschichtiges Rohr nach Anspruch 1 oder 2, wobei die Schicht (A) und die Schicht (B) in engem Kontakt miteinander geschichtet sind und die Schicht (B) und die Schicht (C) in engem Kontakt miteinander geschichtet sind.

4. Mehrschichtiges Rohr nach einem der Ansprüche 1 bis 3, wobei die Schicht (A) als eine innerste Schicht oder eine äußerste Schicht angeordnet ist.

5. Mehrschichtiges Rohr nach einem der Ansprüche 1 bis 4, wobei das in der Schicht (A) enthaltene Silan-vernetzte Polyolefin (a) durch Silan-Vernetzung eines Silan-vernetzbaren Polyolefins (a') erhalten wird, indem das Silan-vernetzbare Polyolefin (a') einer Wasserdampfatmosphäre mit einer Feuchtigkeit von 80% RH oder höher und 50°C oder höher oder heißem Wasser von 50°C oder höher ausgesetzt wird.

6. Mehrschichtiges Rohr, umfassend eine Schicht (A'), die ein Silan-vernetzbares Polyolefin (a') enthält, eine Schicht (B), die ein Klebstoffharz (b) enthält, und eine Schicht (C), die ein Ethylen-Vinylalkohol-Copolymer (c) und ein Antioxidationsmittel (d) enthält, wobei die Schichten (A'), (B) und (C) in dieser Reihenfolge um eine Zentralachse des mehrschichtigen Rohrs geschichtet sind, wobei die Schicht (A') als eine innerste Schicht oder eine äußerste Schicht angeordnet ist,
in der Schicht (C),

das Ethylen-Vinylalkohol-Copolymer (c) einen Ethyleneinheiten-Gehalt von 15 Mol% bis 50 Mol% und einen Verseifungsgrad von 90 Mol% oder mehr aufweist, das Antioxidationsmittel (d) in einem Anteil von 0,1 Massenteilen bis 5 Massenteilen, bezogen auf 100 Massenteile des Ethylen-Vinylalkohol-Copolymers (c), enthalten ist, ein Molekulargewicht MW von 500 bis 800 aufweist, und

das Antioxidationsmittel (d) einer Beziehung genügt, ausgedrückt durch den folgenden Ausdruck (I):

$$\frac{SP}{\sqrt{MW}} \le 0.450 \ (cal \cdot mol/g \cdot cm^3)^{1/2} \quad (I)$$

wobei SP einen Löslichkeitsparameter des Antioxidationsmittels (d) darstellt, wobei das Verfahren zur Bestimmung von SP in der Beschreibung angegeben ist, und MW ein Molekulargewicht des Antioxidationsmittels (d) darstellt,

wobei die Schicht (C) eine konjugierte Polyenverbindung (e) in einer Menge von 10 ppm bis 1000 ppm, bezogen auf 100 Massenteile des Ethylen-Vinylalkohol-Copolymers (c), enthält.

7. Mehrschichtiges Rohr nach Anspruch 6, wobei das Antioxidationsmittel (d) einer Beziehung genügt, ausgedrückt durch den folgenden Ausdruck (I'):

$$0.250 \le \frac{SP}{\sqrt{MW}} \le 0.450 \ (cal \cdot mol/g \cdot cm^3)^{1/2} \quad (I').$$

8. Mehrschichtiges Rohr nach Anspruch 6 oder 7, wobei die Schicht (A') und die Schicht (B) in engem Kontakt miteinander geschichtet sind und die Schicht (B) und die Schicht (C) in engem Kontakt miteinander geschichtet sind.

9. Verfahren zur Herstellung des mehrschichtigen Rohrs nach einem der Ansprüche 1 bis 5, umfassend Silan-Vernetzen des in dem mehrschichtigen Rohr nach einem der Ansprüche 6 bis 8 enthaltenen Silan-vernetzbaren Polyolefins (a').

10. Verfahren zur Herstellung des mehrschichtigen Rohrs nach Anspruch 9, wobei das Silan-Vernetzen durchgeführt wird, indem das in dem mehrschichtigen Rohr enthaltene Silan-vernetzbare Polyolefin (a') einer Wasserdampfatmosphäre mit einer Feuchtigkeit von 80% RH oder höher und 50°C oder höher oder heißem Wasser von 50°C oder höher ausgesetzt wird.

11. Verfahren zur Verhinderung des Ausblutens eines Antioxidationsmittels (d) aus einem mehrschichtigen Rohr, das ein Silan-vernetzbares Polyolefin (a') und das Antioxidationsmittel (d) enthält, bei der Verbesserung der Wärmebeständigkeit des mehrschichtigen Rohres, das Verfahren umfassend Silan-Vernetzen des in dem mehrschichtigen Rohr enthaltene Silan-vernetzbaren Polyolefins (a'), unter Verwendung des mehrschichtigen Rohrs nach einem der Ansprüche 6 bis 8.

12. Verfahren nach Anspruch 11, wobei das Silan-Vernetzen durchgeführt wird, indem das in dem mehrschichtigen Rohr enthaltene Silan-vernetzbare Polyolefin (a') einer Wasserdampfatmosphäre mit einer Feuchtigkeit von 80% RH oder höher und 50°C oder höher oder heißem Wasser von 50°C oder höher ausgesetzt wird.

**Revendications**

1. Tuyau multicouche comprenant une couche (A) qui contient une polyoléfine réticulée au silane (a), une couche (B) qui contient une résine adhésive (b) et une couche (C) qui contient un copolymère d'alcool éthylènevinylique (c) et un antioxydant (d), les couches (A), (B) et (C) étant mises en couches dans cet ordre autour d'un axe central du tuyau multicouche,

dans lequel, dans la couche (C),

le copolymère d'alcool éthylènevinylique (c) a une teneur en motifs éthylène de 15% en mole à 50% en mole et un degré de saponification de 90% en mole ou plus, l'antioxydant (d) est contenu à un rapport de 0,1 partie en masse à 5 parties en masse, sur base de 100 parties en masse du copolymère d'alcool éthylènevinylique (c), et présente un poids moléculaire MW de 500 à 800, et

l'antioxydant (d) satisfait à une relation exprimée par l'Expression suivante (I) :

$$\frac{SP}{\sqrt{MW}} \leq 0.450 \ (cal \cdot mol/g \cdot cm^3)^{1/2} \qquad (I)$$

dans laquelle SP représente un paramètre de solubilité de l'antioxydant (d), dans lequel la méthode de détermination de SP est indiquée dans la description, et MW représente un poids moléculaire de l'antioxydant (d), dans lequel la couche (C) contient un composé de polyène conjugué (e) dans une quantité de 10 ppm à 1000 ppm, sur base de 100 parties en masse du copolymère d'alcool éthylènevinylique (c).

2.  Tuyau multicouche selon la revendication 1, dans lequel l'antioxydant (d) satisfait à une relation exprimée par l'Expression suivante (I') :

$$0.250 \leq \frac{SP}{\sqrt{MW}} \leq 0.450 \ (cal \cdot mol/g \cdot cm^3)^{1/2} \qquad (I').$$

3.  Tuyau multicouche selon la revendication 1 ou 2, dans lequel la couche (A) et la couche (B) sont mises en couches en étroit contact l'une avec l'autre, et la couche (B) et la couche (C) sont mises en couches en étroit contact l'une avec l'autre.

4.  Tuyau multicouche selon l'une quelconque des revendications 1 à 3, dans lequel la couche (A) est disposée en tant que couche la plus intérieure ou que couche la plus extérieure.

5.  Tuyau multicouche selon l'une quelconque des revendications 1 à 4, dans lequel la polyoléfine réticulée au silane (a) contenue dans la couche (A) est obtenue par réticulation au silane d'une polyoléfine pouvant réticuler au silane (a') en soumettant la polyoléfine pouvant réticuler au silane (a') à une atmosphère de vapeur d'eau à une humidité de 80% d'HR ou plus et 50°C ou moins, ou à de l'eau chaude de 50°C ou plus.

6.  Tuyau multicouche comprenant une couche (A') qui contient une polyoléfine pouvant réticuler au silane (a'), une couche (B) qui contient une résine adhésive (b) et une couche (C) qui contient un copolymère d'alcool éthylènevinylique (c) et un antioxydant (d), les couches (A'), (B) et (C) étant mises en couches dans cet ordre autour d'un axe central du tuyau multicouche,

    dans lequel la couche (A') est disposée en tant que couche la plus intérieure ou que couche la plus extérieure, dans la couche (C),
    le copolymère d'alcool éthylènevinylique (c) a une teneur en motifs éthylène de 15% en mole à 50% en mole et un degré de saponification de 90% en mole ou plus, l'antioxydant (d) est contenu dans un rapport de 0,1 partie en masse à 5 parties en masse, sur base de 100 parties en masse du copolymère d'alcool éthylènevinylique (c), et présente un poids moléculaire MW de 500 à 800, et
    l'antioxydant (d) satisfait à une relation exprimée par l'Expression suivante (I) :

$$\frac{SP}{\sqrt{MW}} \leq 0.450 \ (cal \cdot mol/g \cdot cm^3)^{1/2} \qquad (I)$$

    dans laquelle SP représente un paramètre de solubilité de l'antioxydant (d), dans lequel la méthode de détermination de SP est indiquée dans la description, et MW représente un poids moléculaire de l'antioxydant (d), dans lequel la couche (C) contient un composé de polyène conjugué (e) dans une quantité de 10 ppm à 1000 ppm, sur base de 100 parties en masse du copolymère d'alcool éthylènevinylique (c).

7.  Tuyau multicouche selon la revendication 6, dans lequel l'antioxydant (d) satisfait à une relation exprimée par l'Expression suivante (I') :

$$0.250 \leq \frac{SP}{\sqrt{MW}} \leq 0.450 \ (cal \cdot mol/g \cdot cm^3)^{1/2} \qquad (I').$$

8. Tuyau multicouche selon la revendication 6 ou 7, dans lequel la couche (A') et la couche (B) sont mises en couches en étroit contact l'une avec l'autre et la couche (B) ainsi que la couche (C) sont mises en couches en étroit contact l'une avec l'autre.

9. Procédé de fabrication du tuyau multicouche selon l'une quelconque des revendications 1 à 5, comprenant la réticulation au silane de la polyoléfine pouvant réticuler au silane (a') contenue dans le tuyau multicouche selon l'une quelconque des revendications 6 à 8.

10. Procédé de fabrication du tuyau multicouche selon la revendication 9, dans lequel la réticulation au silane est réalisée en soumettant la polyoléfine pouvant réticuler au silane (a') contenue dans le tuyau multicouche à une atmosphère de vapeur d'eau d'une humidité de 80% d'HR ou plus et 50°C ou plus, ou de l'eau chaude à 50°C ou plus.

11. Procédé pour empêcher un antioxydant (d) de s'écouler hors d'un tuyau multicouche qui contient une polyoléfine pouvant réticuler au silane (a') et l'antioxydant (d) lors d'une amélioration d'une résistance à la chaleur du tuyau multicouche, le procédé comprenant la réticulation au silane de la polyoléfine pouvant réticuler au silane (a') contenue dans le tuyau multicouche, en utilisant le tuyau multicouche selon l'une quelconque des revendications 6 à 8.

12. Procédé selon la revendication 11, dans lequel la réticulation au silane est réalisée en soumettant la polyoléfine pouvant réticuler au silane (a') contenue dans le tuyau multicouche à une atmosphère de vapeur d'eau d'une humidité de 80% d'HR ou plus et 50°C ou moins, ou à de l'eau chaude de 50°C ou plus.

[FIG.1]

(i)

100

A

A

95

80

(ii) 100

95

80

90

[FIG.2]

100

130

120

110

95

90

80

[FIG.3]

[FIG.4]

(i)

(ii)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006289964 A
- JP S6183035 A
- JP H8224836 A
- JP 2007283582 A
- JP 2006123532 A

**Non-patent literature cited in the description**

- **R. F. FEDORS.** *Polym. Eng. Sci.,* 1974, vol. 14 (2), 147-154